(19) Europäisches Patentamt
European Patent Office
Office européen des brevets

(11) **EP 2 559 322 B1**

(12) # EUROPÄISCHE PATENTSCHRIFT

(45) Veröffentlichungstag und Bekanntmachung des Hinweises auf die Patenterteilung:
**24.08.2016 Patentblatt 2016/34**

(21) Anmeldenummer: **11713781.0**

(22) Anmeldetag: **11.04.2011**

(51) Int Cl.:
*H05B 33/08* (2006.01)     *H05B 37/02* (2006.01)
*F21W 111/06* (2006.01)

(86) Internationale Anmeldenummer:
**PCT/EP2011/055607**

(87) Internationale Veröffentlichungsnummer:
**WO 2011/128285 (20.10.2011 Gazette 2011/42)**

(54) **VERFAHREN ZUR STEUERUNG EINES LICHTSTROMS EINER LEUCHTEINRICHTUNG MIT EINER ANZAHL VON HALBLEITERLEUCHTMITTELN, DIE ZUR KENNZEICHNUNG UND MARKIERUNG VON VERKEHRSFLÄCHEN VON FLUGHÄFEN EINGERICHTET IST**

METHOD FOR CONTROLLING A LIGHT FLUX OF A LIGHTING DEVICE THAT HAS A PLURALITY OF SEMICONDUCTOR LUMINOUS ELEMENTS AND IS DESIGNED FOR THE IDENTIFICATION AND MARKING OF TRAFFIC AREAS OF AIRPORTS

PROCÉDÉ DE COMMANDE D'UN FLUX LUMINEUX D'UN SYSTÈME D'ÉCLAIRAGE PRÉSENTANT UNE PLURALITÉ D'ÉLÉMENTS LUMINEUX À SEMI-CONDUCTEURS, CONÇU POUR LE BALISAGE ET LE MARQUAGE DE SURFACES DE CIRCULATION D'AÉROPORTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2010 DE 102010015125**

(43) Veröffentlichungstag der Anmeldung:
**20.02.2013 Patentblatt 2013/08**

(73) Patentinhaber: **Hella KGaA Hueck & Co.**
**59552 Lippstadt (DE)**

(72) Erfinder: **DECIUS, Nikolaus**
**59558 Lippstadt (DE)**

(74) Vertreter: **Jöstingmeier, Martin et al**
**Lohr, Jöstingmeier & Partner**
**Junkersstraße 3**
**82178 Puchheim (DE)**

(56) Entgegenhaltungen:
**WO-A1-97/44612       WO-A2-2009/157763**
**US-A1- 2007 103 086   US-B1- 7 598 683**
**US-B2- 7 463 070**

**Beschreibung**

Die vorliegende Erfindung betrifft ein Verfahren zur Steuerung eines Lichtstroms einer Leuchteinrichtung mit einer Anzahl von Halbleiterleuchtmitteln, die zur Kennzeichnung und Markierung von Verkehrsflächen von Flughäfen eingerichtet ist, bei dem Periodenintervalle mit einer festen Periodenlänge vorgegeben werden, ein mittlerer Lichtstrom zum Betrieb der Halbleiterleuchtmittel innerhalb der Periodenintervalle gewählt wird und in jedem der Periodenintervalle eine Anzahl von Strompulsen mit einer Pulsamplitude $I_P$ und einer festen Pulsdauer T erzeugt wird.

Leuchteinrichtungen der vorstehend genannten Art, die zur Kennzeichnung und Markierung von Verkehrsflächen von Flughäfen und zur Signalabgabe geeignet sind, sind aus dem Stand der Technik in verschiedenen Ausführungsformen bereits bekannt. So verfügen zum Beispiel Start- und Landebahnen sowie Rollbahnen von Flughäfen über entsprechende Leuchteinrichtungen, welche zum Beispiel den Anfang, das Ende und die Mitte einer Bahn sowie darüber hinaus auch einzelne Abschnitte der Bahn markieren können. Bei derartigen Leuchteinrichtungen, die insbesondere als Unterflur-Leuchteinrichtungen ausgebildet sind, werden häufig Halogen-Leuchtmittel eingesetzt, die eine typische Lebensdauer von etwa 1000 bis 1500 Betriebsstunden haben und damit erfahrungsgemäß relativ häufig ausgetauscht werden müssen. Ein weiterer Nachteil von Halogen-Leuchtmitteln besteht darin, dass sie während ihres Betriebs relativ viel elektrische Energie verbrauchen.

Aus der US 7, 598,683 B1 ist ein Verfahren zur Steuerung eines Lichtstroms einer Leuchteinrichtung mit einer Anzahl von Halbleiterleuchtmitteln bekannt, bei dem Periodenintervalle mit einer festen Periodenlänge vorgegeben werden, ein mittlerer Lichtstrom zum Betrieb der Halbleiterleuchtmittel innerhalb der Periodenintervalle gewählt wird und in jedem der Periodenintervalle eine Anzahl von Strompulsen mit einer Pulsamplitude und einer festen Pulsdauer erzeugt wird. Die Frequenz der Strompulse innerhalb eines Periodenintervalls ist dabei fest eingestellt, woraus unveränderbare Abstände der Strompulse zueinander innerhalb eines Periodenintervalls resultieren. Die Anzahl der Strompulse in jedem Periodenintervall wird so gewählt, dass innerhalb der Periodenintervalle der jeweils vorgegebene mittlere Lichtstrom erreicht wird.

Aus der WO2009/157763 A2 ist es für eine Pulsweitenmodulation bekannt, Strompulse mit einer Pulsamplitude zu erzeugen, die auf den Nennstrom oder kleiner als der Nennstrom der Halbleiterleuchtmittel eingestellt sind.

In der US 7,463,070 ist eine aufwendige Steuerschaltung für LEDs beschrieben, bei der die Pulsfrequenz, die Pulsamplituden und die Pulsbreiten über Potentiometer einstellbar sind. Aus dem Stand der Technik ist es bereits bekannt, bei Leuchteinrichtungen, die zur Kennzeichnung und Markierung von Verkehrsflächen von Flughäfen geeignet sind, die Halogen-Leuchtmittel durch Leuchtmittel auf Halbleiterbasis, insbesondere durch Leuchtdioden, zu ersetzen. Die EP 0 898 683 B1 sowie die EP 0 898 684 B1 offenbaren beispielhaft derartige Leuchteinrichtungen. Weitere Leuchteinrichtungen zur Kennzeichnung und Markierung von Verkehrsflächen von Flughäfen, bei denen Halbleiterelemente als Lichtquellen eingesetzt werden, sind aus der WO 2009/077010 A1, der WO 97/44614 A1 oder der WO 97/44612 A1 bekannt.

Um die elektrische Leistung und damit die Intensität der Lichtabstrahlung der Halbleiterleuchtmittel gesteuert variieren zu können, ist bei den Leuchteinrichtungen eine entsprechende Steuerungseinrichtung vorgesehen. Nach heutigem Stand der Technik wird entweder der Versorgungsstrom für die Halbleiterleuchtmittel dem gewünschten Lichtstrom entsprechend angepasst. In einem alternativen Verfahren wird der Versorgungsstrom für eine maximale Helligkeitsstufe in einem vorbestimmten Periodenintervall fest eingestellt, wobei der Strom mittels eines pulsweitenmodulierten Signals (PWM-Signals) mit hoher Frequenz kontinuierlich ein- und wieder ausgeschaltet wird. Dabei kann das Verhältnis zwischen der Länge des Einschaltpulses zu der Dauer des Periodenintervalls zwischen 0% ("aus") und 100% ("an") gesteuert werden und bestimmt so die Stärke des Lichtstroms innerhalb des Periodenintervalls und damit auch die Helligkeit der Halbleiterleuchtmittel der Leuchteinrichtung. Die Steuerungseinrichtung erzeugt dabei Signale mit einer festen Periodenlänge, wobei die Pulsdauer innerhalb einer Periode die Einschaltdauer des Leuchtmittels innerhalb des Periodenintervalls festlegt. Dabei muss für die gewünschte Helligkeit die Pulsdauer ermittelt werden, die im Verhältnis zur Periodenlänge des Signals die relative Einschaltdauer angibt. Beispielhaft beschreibt die EP 0 898 684 B1 eine Leuchteinrichtung, die zur Kennzeichnung und Markierung von Verkehrsflächen von Flughäfen geeignet ist und Leuchtdioden aufweist, die mit Hilfe eines derartigen Pulsweitenmodulationsverfahren angesteuert und gedimmt werden können.

Bei den aus dem Stand der Technik bekannten Pulsweitenmodulationsverfahren zur Helligkeitsregelung eines Halbleiterleuchtmittels ist eine hohe Grundfrequenz erforderlich, damit das emittierte Licht vom menschlichen Auge als gleichmäßig und angenehm empfunden wird. Anderenfalls entsteht ein so genannter "Perlschnureffekt". Nachteilig ist in diesem Zusammenhang zum einen der relativ hohe technische Aufwand zur Erzeugung des Pulsweitenmodulationssignals, welches vorzugsweise mittels einer Steuerungseinrichtung realisiert wird, die einen herkömmlichen Mikrocontroller aufweist. Weitere Nachteile sind sichtbare Helligkeitsschwankungen in Form eines Flackerns der Halbleiterleuchtmittel bei sehr niedrigen Ansteuerleistungen, und zwar bei einem sehr kurzen Einschaltpuls mit Nennstrom $I_{NENN}$ und einer sehr langen Pulspause, sowie eine hohe Schaltfrequenz, die aus optischen Gründen für das Leuchtmittel erforderlich ist, aber eine Verlustleistung in den Schaltelementen erzeugt und elektromagnetische Störstrahlungen verursacht.

Grundsätzlich gilt, dass ein Halbleiterleuchtmittel bei einer digitalen Steuerung und Regelung nur zwei Zustände annehmen kann, und zwar die Zustände "an" beim Fließen des Nennstroms $I_{NENN}$ und den Zustand "aus" bei abgeschaltetem Strom. Bei hohen Schaltfrequenzen von mehr als 100 Hz kann das menschliche Auge die Einschaltimpulse nicht mehr auflösen und empfindet den arithmetischen Mittelwert des Lichtsignals als gleichmäßigen Lichtstrom.

Um den arithmetischen Mittelwert eines digitalen Signals zu beeinflussen, muss der Tastgrad des Nennstroms $I_{NENN}$

$$a = \frac{t_e}{t_e + t_a} = \frac{t_e}{T}$$ mit $t_e$ = Einschaltzeit, $t_a$ = Pausenzeit und T = Periodendauer

angepasst werden. Die oben bereits beschriebene Pulsweitenmodulation (PWM) arbeitet dabei mit variabler Einschaltzeit und fester Periodendauer.

Zur Steuerung von Gleichspannungswandlern wird in der Literatur auch ein anderes Modulationsverfahren, das als Pulsfolgemodulation oder Pulsfrequenzmodulation bezeichnet wird, beschrieben. Die Pulsfolgemodulation eignet sich ebenfalls für eine digitale Steuerung von Halbleiterleuchtmitteln. Bei diesem Verfahren wird im Gegensatz zur Pulsweitenmodulation die Pausenzeit moduliert und die Einschaltzeit konstant gehalten. Dieses Verfahren ist technisch sehr einfach umsetzbar, indem ein steuerbarer Oszillator ein Monoflop triggert, welches dadurch seine fest eingestellten Einschaltimpulse als Signalstrom abgibt.

Der vorliegenden Erfindung liegt die Aufgabe zu Grunde, ein alternatives Verfahren zur Steuerung eines Lichtstroms einer Leuchteinrichtung der eingangs genannten Art anzugeben, das auf einfache und kostengünstige Weise technisch umgesetzt werden kann und die Halbleiterleuchtmittel effizient ansteuern kann.

Die Lösung dieser Aufgabe liefert ein Verfahren der eingangs genannten Art mit den Merkmalen des kennzeichnenden Teils des Anspruchs 1. Vorteilhafte Weiterbildungen der Erfindung sind in den Unteransprüchen angegeben.

Das erfindungsgemäße Verfahren zeichnet sich dadurch aus, dass die Anzahl der Strompulse in jedem Periodenintervall so gewählt wird, dass innerhalb der Periodenintervalle der jeweils vorgegebene mittlere Lichtstrom erreicht wird, wobei die Pulspausen zwischen aufeinanderfolgenden Strompulsen variabel eingestellt werden. Das hier vorgestellte Ansteuerungsverfahren für die Halbleiterleuchtmittel der Leuchteinrichtung basiert zwar auch auf einem modulierten, geregelten Strom, verwendet aber ein anderes Modulationsverfahren. Das erfindungsgemäße Steuerungsverfahren sieht vor, dass je nach gewünschtem mittlerem Lichtstrom innerhalb eines Periodenintervalls mit fester Periodenlänge die Anzahl der Einschaltimpulse, die allesamt eine konstante Pulsdauer haben, pro Periodenintervall festgelegt wird. Die Länge des Periodenintervalls ist dabei fest vorgegeben und somit nicht variierbar. Somit wird die Pulsanzahl in einem bestimmten Periodenintervall moduliert. Im Unterschied zu der aus dem Stand der Technik bekannten Pulsfolgemodulation wird eine diskrete Anzahl von Strompulsen pro (festem) Periodenintervall erzeugt, während die Pulsfolgemodulation die Pausendauer des Periodenintervalls linear moduliert. Bei dem erfindungsgemäßen Verfahren kann durchaus der Fall eintreten, dass weniger als ein ganzzahliges Vielfaches von Puls und Pause in das Periodenintervall passt, wodurch zum Beispiel die letzte Pause innerhalb eines Periodenintervalls kürzer oder länger sein kann, als die vorhergehenden Pausen innerhalb dieses Periodenintervalls. Die Pulspausen zwischen aufeinanderfolgenden Strompulsen können bei dem erfindungsgemäßen Verfahren variabel eingestellt werden, so dass zumindest die Pulspausen zwischen einigen Strompulsen unterschiedlich sein können. Der Vorteil des hier vorgestellten Verfahrens ist die einfache technische Realisierung, indem in einer vorteilhaften Ausführungsform zum Beispiel ein Pulsgenerator, insbesondere ein Monoflop, der zur Erzeugung der Strompulse geeignet ist, durch einen Zähler innerhalb des festen Periodenintervalls so oft ausgelöst wird, bis der mittlere Lichtstrom erreicht wird. Am Ende des Periodenintervalls wird der Zähler zurückgesetzt und für das nächste Periodenintervall neu gestartet.

In einer besonders vorteilhaften Ausführungsform wird vorgeschlagen, dass die Pulsamplituden $I_P$ zumindest einiger Strompulse auf den Nennstrom $I_{NENN}$ der Halbleiterleuchtmittel eingestellt werden. Es kann auch vorgesehen sein, dass die Pulsamplituden $I_P$ aller Strompulse auf den Nennstrom $I_{NENN}$ der Halbleiterleuchtmittel eingestellt werden. Alternativ besteht auch die Möglichkeit, dass die Pulsamplituden $I_P$ zumindest einiger Strompulse so eingestellt werden, dass sie kleiner als der Nennstrom $I_{NENN}$ der Halbleiterleuchtmittel sind. In jedem Periodenintervall wird die Anzahl der Strompulse so gewählt, dass innerhalb der Periodenintervalle die jeweils vorgegebene mittlere Stromstärke erreicht wird. Die Pulspausen zwischen aufeinanderfolgenden Strompulsen werden dabei variabel eingestellt.

Besonders vorteilhaft ist dabei, dass die Periodendauer bei dem hier vorgestellten Verfahren größer sein darf als bei der Pulsweitenmodulation, und das bei gleichem oder sogar besserem optischen Erscheinungsbild der Leuchteinrichtung. Denn bei geringen bis mittleren Lichtströmen erhöht sich durch die zunehmende Anzahl der Einschaltimpulse automatisch die effektive Frequenz, wodurch ein als gleichmäßig empfundener Lichtstrom entsteht. Besonders vorteilhaft ist dieser Effekt, weil diese Betriebszustände besonders häufig auftreten. Bei großen Lichtströmen verringert sich die effektive Frequenz zwar wieder, aber die kurzen Pausen zwischen den Einschaltimpulsen sorgen weiterhin für einen als gleichmäßig empfundenen Lichtstrom. Lediglich bei extrem geringen Lichtströmen kann es dennoch zu einem unerwünschten Flackern der Leuchtmittel kommen. Dieser Betriebszustand wird bei zahlreichen Anwendungen nicht benötigt und erfordert in diesen Fällen keine technische Optimierung. Aber auch bei denjenigen Anwendungen, bei denen sehr niedrige Lichtströme auftreten, sieht das hier vorgestellte Verfahren technische Lösungen vor, die Gegenstände vorteilhafter Weiterbildungen der Erfindung sind.

Gemäß einer vorteilhaften Weiterbildung des Verfahrens wird vorgeschlagen, dass ein Lichtstrom, der einem Bruchteil des maximalen Lichtstroms innerhalb eines Periodenintervalls entspricht und ein flackerfreies Leuchten der Halbleiterleuchtmittel der Leuchteinrichtung erzeugt, als Konstantstrom $I_{MIN\_KONST}$ permanent in die Leuchteinrichtung eingespeist wird. Die Halbleiterleuchtmittel werden also in vorteilhafter Weise permanent mit einem niedrigen geregelten Schwellstrom versorgt, der einen minimalen Lichtstrom erzeugt und bewirkt, dass die Halbleiterleuchtmittel flackerfrei betrieben werden können. Zur Vergrößerung des Lichtstroms wird in den Periodenintervallen vorteilhaft eine entsprechende Anzahl diskreter Strompulse mit Nennstrom $I_{NENN}$ zugeschaltet. Bei Vollansteuerung fließt der Nennstrom $I_{NENN}$ dann wiederum permanent.

Es besteht in einer weiteren bevorzugten Ausführungsform die Möglichkeit, dass die Pulsamplituden $I_P$ bei mittleren Lichtströmen, die $\leq 50\%$ des maximalen Lichtstroms sind, kleiner als der Nennstrom $I_{NENN}$ eingestellt werden und dass bei Erreichen eines voreinstellbaren Schwellwertes des mittleren Lichtstroms die Pulsamplituden $I_P$ auf einen höheren Strom, insbesondere auf den Nennstrom $I_{NENN}$ der Halbleiterleuchtmittel, eingestellt werden. Beispielsweise können die Pulsamplituden $I_P$ für geringe Lichtströme, die $\leq 50\%$ des maximalen Lichtstroms sind, um einen bestimmten Faktor herabgesetzt wird (zum Beispiel auf 50% des Nennstroms $I_{NENN}$). Zur Steuerung dieses geringen Lichtstroms wird die Pulsanzahl bei reduzierter Pulsamplitude $I_P$ zwischen 0% und 100% moduliert, wobei eine höhere Pulsfrequenz von Beginn an in besonders vorteilhafter Weise für einen flackerfreien Betrieb der Halbleiterleuchtmittel der Leuchteinrichtung sorgt. Zum Erreichen eines höheren Lichtstroms wird dann nach Erreichen eines bestimmten Schwellwertes des mittleren Lichtstroms beispielsweise wieder auf den Nennstrombetrieb umgeschaltet und die Anzahl der Strompulse pro Periodenintervall an den mittleren Lichtstrom angepasst.

In einer besonders vorteilhaften Ausführungsform wird vorgeschlagen, dass die Pulsamplituden $I_P$ bei mittleren Lichtströmen, die $\leq 10\%$ des maximalen Lichtstroms sind, auf 10% des Nennstroms $I_{NENN}$ eingestellt werden. Zur Steuerung des mittleren Lichtstroms wird die Pulsanzahl bei auf 10% des Nennstroms $I_{NENN}$ reduzierter Pulsamplitude $I_P$ zwischen 0% und 100% moduliert. Maximal kann dabei (bei einem Modulationsgrad von 100%) ein mittlerer Lichtstrom von 10% des maximalen Lichtstroms erzeugt werden. Bei Erreichen dieses Schwellwertes wird die Pulsamplitude dann entweder sofort auf den Nennstrom $I_{NENN}$ erhöht und die Pulsanzahl entsprechend verringert. Alternativ kann in mindestens einer zusätzlichen Schaltstufe die Pulsamplitude abermals auf einen Wert eingestellt werden, der kleiner als der Nennstrom $I_{NENN}$, aber größer als 10% des maximalen Lichtstroms ist. Die Pulsanzahl wird entsprechend angepasst und dann bei einer Vergrößerung des Lichtstroms erhöht, bis wiederum ein Modulationsgrad von 100% erreicht wird. Dann erfolgt erneut ein Umschalten auf eine höhere Pulsamplitude $I_P$, die kleiner als der Nennstrom $I_{NENN}$ ist oder alternativ sofort auf den Nennstrom $I_{NENN}$ eingestellt wird. Die Pulsanzahl wird wiederum entsprechend angepasst.

Anhand der beigefügten Zeichnungen wird die Erfindung nachfolgend näher erläutert. Dabei zeigen:

Fig. 1    einen Vergleich zwischen einem erfindungsgemäßen Verfahren zur Steuerung eines Lichtstroms einer Leuchteinrichtung mit einer Mehrzahl von Halbleiterleuchtmitteln, die zur Kennzeichnung und Markierung von Verkehrsflächen von Flughäfen, wie zum Beispiel Startbahnen, Landebahnen oder Rollbahnen eingerichtet ist, und einem herkömmlichen, aus dem Stand der Technik bekannten Pulsweitenmodulationsverfahren;

Fig. 2    eine erste Variante des Verfahrens mit überlagertem Gleichstrom;

Fig. 3    eine zweite Variante des Verfahrens mit Erhöhung der Frequenz und gleichzeitiger Reduzierung der Pulsamplitude.

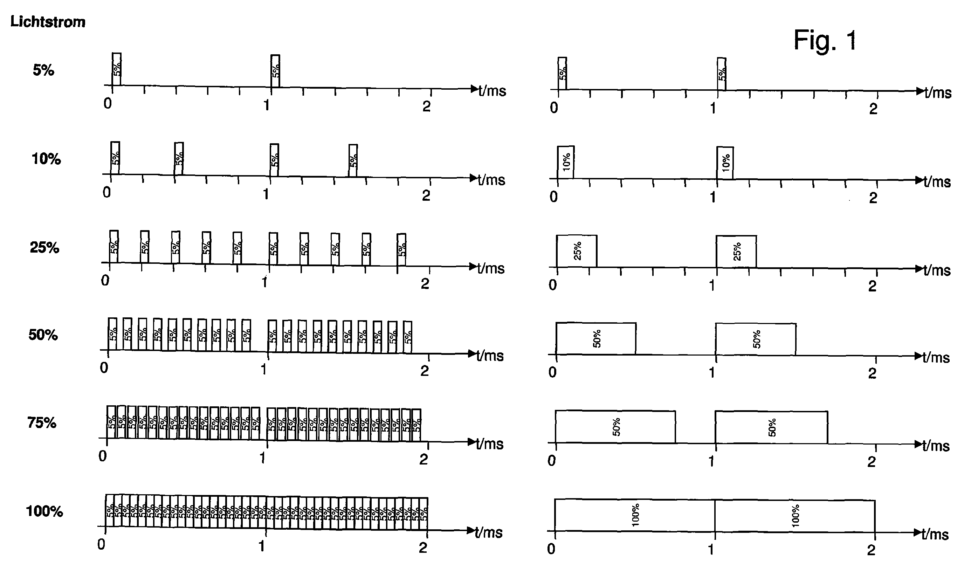

Unter Bezugnahme auf Fig. 1 soll nachfolgend das grundlegende Prinzip eines Verfahrens zur Steuerung eines Lichtstroms einer Leuchteinrichtung mit einer Mehrzahl von Halbleiterleuchtmitteln, die zur Kennzeichnung und Markierung von Verkehrsflächen von Flughäfen, wie zum Beispiel Startbahnen, Landebahnen oder Rollbahnen eingerichtet ist, näher erläutert werden. Eine derartige Leuchteinrichtung kann insbesondere für einen Unterflurbetrieb vorgesehen sein. Die Halbleiterleuchtmittel können insbesondere Leuchtdioden sein.

Im linken Teil von Fig. 1 sind die Verhältnisse bei der Durchführung des neuartigen Ansteuerungsverfahrens für unterschiedliche mittlere Lichtströme zwischen 5% und 100% des maximalen Lichtstroms gezeigt. Rechts sind in Fig. 1 zum Vergleich die Verhältnisse bei dem aus dem Stand der Technik bereits bekannten Pulsweitenmodulationsverfahren dargestellt.

Nachfolgend soll beispielhaft von einem Periodenintervall ausgegangen werden, das eine fest vorgegebene Länge von 1 ms besitzt. In Fig. 1 sind somit insgesamt zwei aufeinander folgende Periodenintervalle mit einer konstanten Periodenlänge von jeweils 1 ms gezeigt. Werden die Halbleiterleuchtmittel während eines Periodenintervalls permanent mit ihrem Nennstrom $I_{NENN}$ betrieben, so beträgt der Lichtstrom 100% (= maximaler Lichtstrom). Lediglich zur Vereinfachung der grafischen Darstellbarkeit soll nachfolgend davon ausgegangen werden, dass die Halbleiterleuchtmittel der Leuchteinrichtung mit diskreten rechteckförmigen Strompulsen mit dem Nennstrom $I_{NENN}$ und einer festen Pulsdauer betrieben werden, so dass jeder Strompuls eine Stärke von 5% des maximalen Lichtstroms erreicht. Tatsächlich ist jedoch die Auflösung der Steuerungseinrichtung, die für den Betrieb der Leuchteinrichtung vorgesehen ist, viel höher. So können die einzelnen rechteckigen Strompulse eine Stärke von 1/1000 des maximalen Lichtstroms innerhalb des Periodenintervalls haben.

## a) 5% Lichtstrom

Wenn die Leuchteinrichtung lediglich mit einem mittleren Lichtstrom von 5% des maximalen Lichtstroms betrieben werden soll, wird in jedem der beiden Periodenintervalle ein rechteckiger Strompuls mit 5% des maximalen Lichtstroms erzeugt. Während der Pulsdauer des Strompulses fließt dabei der Nennstrom $I_{NENN}$. Entsprechendes gilt auch bei dem Pulsweitenmodulationsverfahren, bei dem ebenfalls in jedem der beiden Periodenintervalle ein Strompuls mit dem Nennstrom $I_{NENN}$, dessen Pulslänge so gewählt wird, dass ein arithmetischer Mittelwert des Stroms, der 5% des maximalen Lichtstroms innerhalb des Periodenintervalls entspricht, erzeugt wird.

## b) 10% Lichtstrom

Wenn nun der mittlere Lichtstrom auf 10% des maximalen Lichtstroms erhöht und damit verdoppelt werden soll, werden bei dem erfindungsgemäßen Verfahren in jedem der beiden Periodenintervalle jeweils zwei diskrete Strompulse mit dem Nennstrom $I_{NENN}$ erzeugt, die jeweils 5% des maximalen Lichtstroms innerhalb des Periodenintervalls liefern. Im Vergleich dazu wird bei dem Pulsweitenmodulationsverfahren in jedem der beiden Periodenintervalle ein Strompuls mit dem Nennstrom $I_{NENN}$ erzeugt, der 10% des maximalen Lichtstroms liefert. Zu diesem Zweck wird die Pulsbreite (und damit die Länge des Nennstrompulses) im Vergleich zur Einspeisung eines mittleren Lichtstroms von 5% des maximalen Lichtstroms verdoppelt.

Es wird deutlich, dass bei dem neuartigen Verfahren die Pulspause zwischen dem ersten rechteckigen Nennstrompuls und dem zweiten rechteckigen Nennstrompuls innerhalb des ersten Periodenintervalls etwas kürzer ist als die Pulspause zwischen dem zweiten Nennstrompuls innerhalb des ersten Periodenintervalls und dem ersten Nennstrompuls innerhalb des zweiten Periodenintervalls. Es ist also mit anderen Worten nicht erforderlich, dass die Pulspausen zwischen zwei aufeinanderfolgenden Strompulsen jeweils konstant sind. So ist zum Beispiel die Pulspause zwischen dem ersten und zweiten Strompuls innerhalb des ersten Periodenintervalls kürzer als die Pulspause zwischen dem ersten und zweiten Strompuls innerhalb des zweiten Periodenintervalls. Bei dem neuartigen Steuerungsverfahren ist es mit anderen Worten somit nur erforderlich, die Anzahl der Pulse pro Periodenintervall zu erhöhen, um den effektiven Lichtstrom zu verdoppeln. Es kommt nicht darauf an, an welchen Stellen innerhalb eines Periodenintervalls die Nennstrompulse erzeugt werden.

## c) 25% Lichtstrom

Sofern die Leuchteinrichtung mit einem mittleren Lichtstrom von 25% des maximalen Lichtstroms betrieben werden soll, werden bei dem erfindungsgemäßen Verfahren in jedem Periodenintervall fünf Nennstrompulse mit einer festen Pulsdauer erzeugt, so dass die Strompulse jeweils 5% des maximalen Lichtstroms liefern. Auch hier ist es nicht erforderlich, dass die Pulspausen zwischen zwei aufeinanderfolgenden Strompulsen jeweils konstant sind. Entscheidend ist nur, dass in jedem der beiden Periodenintervalle jeweils fünf diskrete Strompulse erzeugt werden. Im Vergleich dazu wird bei der Pulsweitenmodulation in jedem der beiden Periodenintervalle ein einzelner Strompuls von der Stärke des Nennstroms $I_{NENN}$ und mit einer Pulslänge erzeugt, so dass der Puls 25% des maximalen Lichtstroms innerhalb des Periodenintervalls liefert.

## d) 50% Lichtstrom

Soll die Leuchteinrichtung nun mit 50% des maximalen Lichtstroms betrieben werden, so werden bei dem erfindungsgemäßen Verfahren in jedem Periodenintervall 10 rechteckförmige Nennstrompulse mit einer Pulslänge erzeugt, die jeweils 5% des maximalen Lichtstroms liefern. Es ist dabei erneut nicht erforderlich, dass die Pulspausen zwischen zwei aufeinanderfolgenden Strompulsen jeweils konstant sind. Bei der Pulsweitenmodulation wird in jedem der beiden Periodenintervalle die Pulsdauer erhöht, so dass ein Strompuls mit 50% des maximalen Lichtstroms erzeugt wird.

e) 75% Lichtstrom

Wenn die Leuchteinrichtung mit einem mittleren Lichtstrom von 75% des maximalen Lichtstroms betrieben werden soll, werden bei dem erfindungsgemäßen Verfahren in jedem Periodenintervall 15 Nennstrompulse erzeugt, die jeweils 5% des maximalen Lichtstroms liefern. Es ist wiederum nicht erforderlich, dass die Pulspausen zwischen zwei aufeinanderfolgenden Strompulsen jeweils konstant sind. Bei der Pulsweitenmodulation wird in jedem der beiden Periodenintervalle die Pulslänge derart erhöht, dass ein Strompuls mit 75% des maximalen Lichtstroms erzeugt wird.

f) 100% Lichtstrom

Bei einem Lichtstrom, der 100% des maximalen Lichtstroms beträgt, fließt der Nennstrom $I_{NENN}$ bei beiden Verfahren dauerhaft durch die Halbleiterleuchtmittel der Leuchteinrichtung. Die Leuchteinrichtung ist also permanent eingeschaltet und der Nennstrom $I_{NENN}$ fließt permanent.

Bei einem Vergleich von Pulsweitenmodulation mit dem hier vorgestellten Modulationsverfahren sind die Zustände "aus" (0% Lichtstrom), "kleinste Dimmstufe" (5% mittlerer Lichtstrom) und "maximaler Lichtstrom" (100% Lichtstrom) gleich. Sie gehören aber streng genommen weder zu dem einen noch zu dem anderen Verfahren. Denn die Zustände "aus" und "an" sind statische Zustände und die kleinste Dimmstufe ist gewissermaßen die Grundeinstellung eines oder mehrerer gepulst betriebener Halbleiterleuchtmittel, auf der entweder das eine oder das andere Modulationsverfahren aufsetzt.

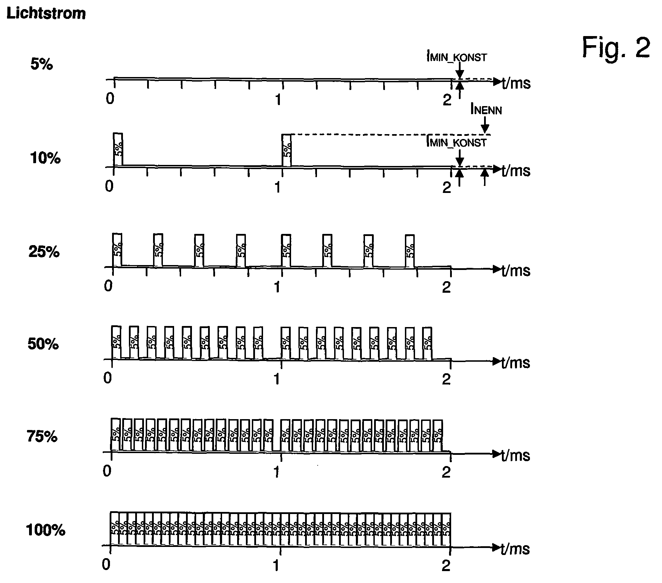

Unter Bezugnahme auf Fig. 2 soll nachfolgend eine erste Variante des vorstehend beschriebenen Verfahrens zur Steuerung eines Lichtstroms einer Leuchteinrichtung mit einer Mehrzahl von Halbleiterleuchtmitteln näher erläutert werden. Wiederum wird zur Vereinfachung der grafischen Darstellbarkeit davon ausgegangen, dass die Halbleiterleuchtmittel der Leuchteinrichtung von einer Steuerungseinrichtung mit einzelnen rechteckigen Strompulsen mit dem Nennstrom $I_{NENN}$ und einer festen Pulsdauer versorgt werden, so dass jeder der Pulse eine Stärke von 5% des maximalen Lichtstroms innerhalb des Periodenintervalls hat. Tatsächlich ist jedoch die Auflösung viel höher. So können die einzelnen Strompulse eine Stärke von lediglich 1/1000 des maximalen Lichtstroms haben.

Diese Variante befasst sich mit der Möglichkeit des flackerfreien Dimmens der Halbleiterleuchtmittel der Leuchteinrichtung. Unter der Annahme, dass bei einem Lichtstrom von 5% des maximalen Lichtstroms ein dauerhaftes (flackerfreies) Leuchten der Halbleiterleuchtmittel der Leuchteinrichtung erreicht werden kann, wird dieser Lichtstrom als Konstantstrom $I_{MIN\_KONST}$ dauerhaft in die Leuchteinrichtung eingespeist.

Soll der Lichtstrom nun von 5% auf 10% des maximalen Lichtstroms erhöht werden, so wird in jedem der Periodenintervalle, die vorliegend wiederum eine Länge von 1 ms haben, zusätzlich zu dem Konstantstrom $I_{MIN\_KONST}$ jeweils ein weiterer rechteckiger Nennstrompuls mit jeweils 5% des maximalen Lichtstroms erzeugt. Zur Erzeugung eines Lichtstroms von 25% des Nennstroms $I_{NENN}$ werden in jedem Periodenintervall zusätzlich zu dem Konstantstrom $I_{MIN\_KONST}$ vier, bei 50% des Nennstroms $I_{NENN}$ neun und bei 75% des Nennstroms $I_{NENN}$ vierzehn weitere Strompulse mit jeweils 5% des maximalen Lichtstroms erzeugt. Dabei ist es wiederum nicht erforderlich, dass die Pulspausen zwischen den aufeinanderfolgenden Strompulsen jeweils konstant sind. Es ist somit nur erforderlich, die Anzahl der Pulse pro Periodenintervall zu erhöhen, um den Lichtstrom zu erhöhen. Es kommt nicht darauf an, an welchen Stellen innerhalb eines Periodenintervalls die Pulse erzeugt werden.

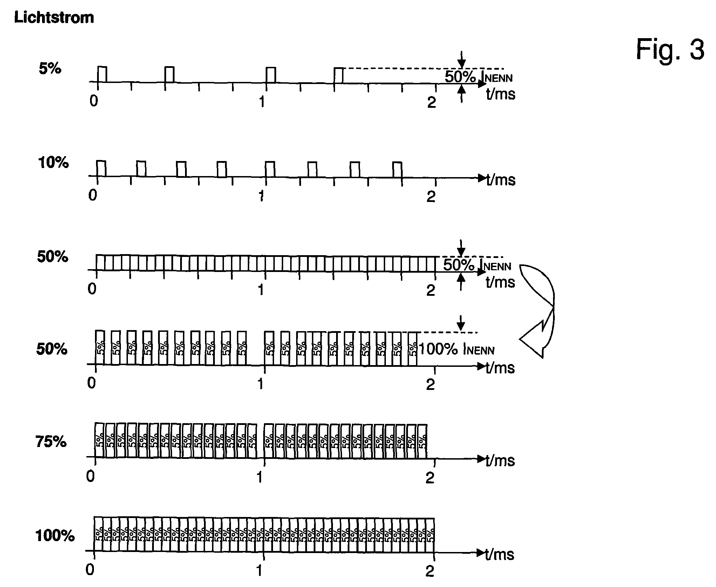

Unter Bezugnahme auf Fig. 3 soll nachfolgend eine zweite Variante des oben beschriebenen Verfahrens zur Steuerung eines Lichtstroms einer Leuchteinrichtung mit einer Mehrzahl von Halbleiterleuchtmitteln näher erläutert werden.

Wiederum wird zur Vereinfachung der grafischen Darstellbarkeit nachfolgend davon ausgegangen, dass die Halbleiterleuchtmittel der Leuchteinrichtung mit diskreten rechteckförmigen Strompulsen mit dem Nennstrom $I_{NENN}$ und einer festen Pulsdauer betrieben werden können, so dass jeder Strompuls eine Stärke von 5% des maximalen Lichtstroms erreichen kann. Tatsächlich ist jedoch die Auflösung der Steuerungseinrichtung viel höher. So können die einzelnen rechteckigen Strompulse eine Stärke von 1/1000 des maximalen Lichtstroms innerhalb des Periodenintervalls haben. Zusätzlich ist es in dieser Variante möglich, Strompulse zu erzeugen, die eine Pulsamplitude haben, die kleiner als der Nennstrom $I_{NENN}$ ist.

Diese Variante befasst sich ebenfalls mit der Möglichkeit des flackerfreien Dimmens der Halbleiterleuchtmittel der Leuchteinrichtung. Anders als bei der vorstehend beschriebenen Variante wird vorliegend kein zusätzlicher Lichtstrom in Form eines Konstantstroms $I_{MIN\_KONST}$ in die Leuchteinrichtung eingespeist. Vielmehr werden bei einer mittleren Lichtstromstärke zwischen 5% und 50% diskrete Strompulse erzeugt, deren Pulsamplituden kleiner, vorzugsweise wesentlich kleiner, als der Nennstrom $I_{NENN}$ sind. Vorliegend werden Pulse erzeugt, die eine Pulsamplitude aufweisen, die 50% des Nennstroms $I_{NENN}$ der Halbleiterleuchtmittel entspricht.

Zum Erzeugen eines mittleren Lichtstroms, der 5% des maximalen Lichtstroms innerhalb des Periodenintervalls entspricht, werden also in jedem Periodenintervall zwei Strompulse mit vorgegebener Pulslänge und halbem Nennstrom $I_{NENN}$ erzeugt. Entsprechendes gilt in diesem Beispiel für Lichtströme bis zu einem mittleren Lichtstrom von 50%, bei denen die Anzahl der Strompulse im Vergleich zu der in Fig. 1 gezeigten Situation jeweils verdoppelt ist. Bei einem mittleren Lichtstrom von 50% fließt ein permanenter Strom mit einer Stärke von 50% des Nennstroms $I_{NENN}$. Dann wird von einem Modulationsgrad von 100% und einer Pulsamplitude, die dem halben Nennstrom $I_{NENN}$ entspricht, auf eine Pulsamplitude pro erzeugtem Puls von 100% des Nennstroms $I_{NENN}$ mit einem Modulationsgrad von 50% umgeschaltet. Diese Situation ist ebenfalls in Fig. 3 dargestellt. Soll der Lichtstrom nun weiter erhöht werden, so ergibt sich wiederum die Situation, die in Fig. 1 bereits gezeigt wurde. Wenn die Leuchteinrichtung mit einem mittleren Lichtstrom von 75% des maximalen Lichtstroms betrieben werden soll, so werden in jedem Periodenintervall wiederum 15 Nennstrompulse erzeugt, die jeweils 5% des maximalen Lichtstroms liefern. Es ist dabei ebenfalls nicht erforderlich, dass die Pulspausen zwischen zwei aufeinanderfolgenden Strompulsen jeweils konstant sind. Bei einem Lichtstrom, der 100% des maximalen Lichtstroms entspricht, fließt der Nennstrom $I_{NENN}$ dauerhaft durch die Halbleiterleuchtmittel der Leuchteinrichtung. Die Leuchteinrichtung ist also permanent eingeschaltet und der Nennstrom $I_{NENN}$ fließt permanent.

An dieser Stelle soll angemerkt werden, dass die anfängliche Reduktion der Pulsamplituden auf 50% des Nennstroms $I_{NENN}$ wiederum nur beispielhaft ist. Effektiver ist es, den Strom, der bei jedem Strompuls fließt, auf 10% des Nennstroms $I_{NENN}$ herabzusetzen. Zur Steuerung des Lichtstroms wird die Pulsanzahl bei auf 10% des Nennstroms $I_{NENN}$ reduzierter Pulsamplitude $I_P$ zwischen 0% und 100% moduliert. Maximal kann dabei (bei einem Modulationsgrad von 100%) ein mittlerer Lichtstrom von 10 % des maximalen Lichtstroms erzeugt werden. Bei Erreichen dieses Schwellwertes wird die Pulsamplitude dann entweder sofort auf den Nennstrom $I_{NENN}$ erhöht und die Pulsanzahl entsprechend verringert. Alternativ kann in mindestens einer zusätzlichen Schaltstufe die Pulsamplitude abermals auf einen Wert eingestellt werden, der kleiner als der Nennstrom $I_{NENN}$, aber größer als 10% des maximalen Lichtstroms ist. Die Pulsanzahl wird ebenfalls entsprechend angepasst und dann bei einer Vergrößerung des Lichtstroms weiter erhöht, bis wiederum ein Modulationsgrad von 100% erreicht wird. Dann erfolgt erneut ein Umschalten auf eine höhere Pulsamplitude $I_P$, die kleiner als der Nennstrom $I_{NENN}$ sein kann oder sofort auf den Nennstrom $I_{NENN}$ eingestellt wird. Die Pulsanzahl wird wiederum entsprechend angepasst.

## Patentansprüche

1. Verfahren zur Steuerung eines Lichtstroms einer Leuchteinrichtung mit einer Anzahl von Halbleiterleuchtmitteln mit einem Nennstrom ($I_{NENN}$) und ein maximalen Lichtstrom, bei dem Periodenintervalle mit einer festen Periodenlänge vorgegeben werden, ein mittlerer Lichtstrom zum Betrieb der Halbleiterleuchtmittel innerhalb der Periodenintervalle gewählt wird und in jedem der Periodenintervalle eine Anzahl von durch Pulspausen getrennten Strompulsen mit einer Pulsamplitude ($I_P$) und einer festen Pulsdauer (T) erzeugt wird, wobei die Anzahl der Strompulse in jedem Periodenintervall so gewählt wird, dass innerhalb der Periodenintervalle der jeweils vorgegebene mittlere Lichtstrom erreicht wird,
**dadurch gekennzeichnet, dass**
die Pulspausen zwischen aufeinanderfolgenden Strompulsen des jeweiligen Periodenintervalls variabel eingestellt werden, wobei die Leuchteinrichtung zur Kennzeichnung und Markierung von Verkehrsflächen von Flughäfen eingerichtet ist.

2. Verfahren nach Anspruch 1, **dadurch gekennzeichnet, dass** ein Pulsgenerator, der zur Erzeugung der Strompulse geeignet ist, innerhalb eines festen Periodenintervalls durch einen Zähler so oft ausgelöst wird, bis der mittlere Lichtstrom erreicht wird, und der Zähler am Ende des Periodenintervalls zurückgesetzt wird und für das nachfolgende Periodenintervall neu gestartet wird.

3. Verfahren nach Anspruch 1 oder 2, **dadurch gekennzeichnet, dass** die Pulsamplituden ($I_P$) zumindest einiger Strompulse auf den Nennstrom ($I_{NENN}$) der Halbleiterleuchtmittel eingestellt werden.

4. Verfahren nach einem der Ansprüche 1 bis 3, **dadurch gekennzeichnet, dass** die Pulsamplituden ($I_P$) zumindest einiger Strompulse so eingestellt werden, dass sie kleiner als der Nennstrom ($I_{NENN}$) der Halbleiterleuchtmittel sind.

5. Verfahren nach einem der Ansprüche 1 bis 4, **dadurch gekennzeichnet, dass** ein Lichtstrom, der einem Bruchteil des maximalen Lichtstroms innerhalb eines Periodenintervalls entspricht, als Konstantstrom ($I_{MIN\_KONST}$) permanent in die Leuchteinrichtung eingespeist wird, welcher bewirkt, dass die Halbleiterleuchtmittel flackerfrei betrieben werden.

6. Verfahren nach Anspruch 5, **dadurch gekennzeichnet, dass** ein Konstantstrom ($I_{MIN\_KONST}$) mit einer Stärke von höchstens 5% des maximalen Lichtstroms permanent in die Leuchteinrichtung eingespeist wird.

**7.** Verfahren nach einem der Ansprüche 5 oder 6, **dadurch gekennzeichnet, dass** zur Vergrößerung des Lichtstroms in den Periodenintervallen eine entsprechende Anzahl diskreter Strompulse mit Nennstrom ($I_{NENN}$) zugeschaltet wird.

**8.** Verfahren nach einem der Ansprüche 1 bis 7, **dadurch gekennzeichnet, dass** die Pulsamplituden ($I_P$) bei mittleren Lichtströmen, die ≤ 50% des maximalen Lichtstroms sind, kleiner als der Nennstrom ($I_{NENN}$) eingestellt werden und dass bei Erreichen eines voreinstellbaren Schwellwertes des mittleren Lichtstroms die Pulsamplituden ($I_P$) auf einen höheren Strom, insbesondere auf den Nennstrom ($I_{NENN}$) der Halbleiterleuchtmittel, eingestellt werden.

**9.** Verfahren nach Anspruch 8, **dadurch gekennzeichnet, dass** die Pulsamplituden ($I_P$) bei mittleren Lichtströmen, die ≤ 10% des maximalen Lichtstroms sind, auf 10% des Nennstroms ($I_{NENN}$) eingestellt werden.

**Claims**

**1.** Method for controlling a light current of a lighting device having a plurality of semiconductor illuminants with a nominal current ($I_{NENN}$) and a maximum current, in which method period intervals with a fixed period length are predetermined, an average light current for operating the semiconductor illuminants is selected within the period intervals, and in each of the period intervals a number of current pulses separated by pulse pauses and having a pulse amplitude ($I_P$) and a fixed pulse duration(T) is generated, wherein the number of current pulses in each period interval is selected such that within the period intervals the respective predetermined average light current is reached, **characterized in that**
the pulse pauses between consecutive current pulses of the respective period interval are variably adjusted, wherein the lighting device is set up for the identification and marking of traffic areas of airports.

**2.** Method according to claim 1, **characterized in that** a pulse generator which is suitable for the generation of the current pulses, is triggered within a fixed period interval by a counter until the average light current is reached, and the counter is reset at the end of the period interval and is restarted for the subsequent period interval.

**3.** Method according to claim 1 or 2, **characterized in that** the pulse amplitudes ($I_P$) to at least some current pulses are adjusted to the nominal current ($I_{NENN}$) of the semiconductor illuminants.

**4.** Method according to one of claims 1 to 3, **characterized in that** the pulse amplitudes ($I_P$) of at least some current pulses are adjusted such that they are smaller than the nominal current ($I_{NENN}$) of the semiconductor illuminants.

**5.** Method according to one of claims 1 to 4, **characterized in that** a light current corresponding to a fraction of the maximum light current within a period interval is permanently fed to the lighting device as constant current ($I_{MIN\_KONST}$), which results in a flicker-free operation of the semiconductor illuminants.

**6.** Method according to claim 5, **characterized in that** a constant current ($I_{MIN\_KONST}$) is permanently fed into the lighting device with a strength of at most 5 % of the maximum light current.

**7.** Method according to any one of claims 5 or 6, **characterized in that** for increasing the light current in the period intervals, a corresponding number of discrete current pulses with nominal current ($I_{NENN}$) is switched on.

**8.** Method according to one of claims 1 to 7, **characterized in that** the pulse amplitudes ($I_P$) at average light currents which are ≤ 50% of the maximum light current, are adjusted to be smaller than the nominal current ($I_{NENN}$), and that on reaching a presetable threshold value of the average light current, the pulse amplitudes ($I_P$) are adjusted to a higher power, in particular the nominal current ($I_{NENN}$) of the semiconductor illuminants.

**9.** Method according to claim 8, **characterized in that** the pulse amplitudes ($I_P$) at average light currents, which are ≤ 10% of the maximum light current, are adjusted to be 10 % of the nominal current ($I_{NENN}$).

**Revendications**

**1.** Procédé pour contrôler le flux lumineux d'une installation d'éclairage comportant un certain nombre de lampes à semi-conducteurs ayant une intensité nominale ($I_{NENN}$) et un flux lumineux maximal, dans lequel des intervalles périodiques ayant une durée de période fixe sont prédéterminés, un flux lumineux moyen est choisi pour le fonctionnement des lampes à semi-conducteurs dans les intervalles périodiques et un certain nombre d'impulsions périodiques séparées par des pauses entre les impulsions, ayant une amplitude d'impulsion ($I_P$) et une durée d'impulsion (T) fixe, est émis pendant chacun des intervalles périodiques, le nombre d'impulsions de courant pendant chaque intervalle périodique étant choisi de telle manière que le flux lumineux moyen prédéfini pour chacun soit atteint pendant les intervalles périodiques, **caractérisé en ce que** les pauses entre les impulsions de courant successives de chaque intervalle périodique peuvent être réglées de façon variable, l'installation d'éclairage étant utilisée pour signaler et marquer des aires de circulation dans des aéroports.

2. Procédé selon la revendication 1, **caractérisé en ce qu'**un générateur d'impulsions convenant pour la génération des impulsions de courant est déclenché par un compteur pendant un intervalle périodique fixe autant de fois qu'il le faut jusqu'à ce que le flux lumineux moyen soit atteint, et le compteur est remis à zéro à la fin de l'intervalle périodique et redémarré pour l'intervalle périodique suivant.

3. Procédé selon la revendication 1 ou 2, **caractérisé en ce que** les amplitudes d'impulsion ($I_P$) d'au moins certaines impulsions de courant sont réglées à l'intensité nominale ($I_{NENN}$) des lampes à semi-conducteurs.

4. Procédé selon l'une des revendications 1 à 3, **caractérisé en ce que** les amplitudes d'impulsions ($I_P$) d'au moins certaines impulsions de courant sont réglées de façon à être plus petites que l'intensité nominale ($I_{NENN}$) des lampes à semi-conducteurs.

5. Procédé selon l'une des revendications 1 à 4, **caractérisé en ce qu'**un flux lumineux correspondant à une fraction du flux lumineux maximal dans un intervalle périodique est fourni en permanence à l'installation d'éclairage sous la forme d'un courant constant ($I_{MIN\_KONST}$) qui a pour effet que les lampes à semi-conducteurs fonctionnent sans vaciller.

6. Procédé selon la revendication 5, **caractérisé en ce qu'**un courant constant ($I_{MIN\_KONST}$) dont l'intensité correspond au maximum à 5 % du flux lumineux maximal est fourni en permanence à l'installation d'éclairage.

7. Procédé selon une des revendications 5 ou 6, **caractérisé en ce qu'**afin d'augmenter le flux lumineux, un nombre correspondant d'impulsions de courant discrètes à l'intensité nominale ($I_{NENN}$) est introduit pendant les intervalles périodiques.

8. Procédé selon l'une des revendications 1 à 7, **caractérisé en ce que** les amplitudes d'impulsions ($I_P$) aux flux lumineux moyens qui représentent $\leq$ 0 % du flux lumineux maximal sont réglées plus bas que l'intensité nominale ($I_{NENN}$) et **en ce que** lorsqu'une valeur de seuil du flux lumineux moyen pouvant être prédéterminée est atteinte, les amplitudes d'impulsions ($I_P$) sont réglées à une intensité supérieure, en particulier à l'intensité nominale ($I_{NENN}$) des lampes à semi-conducteurs.

9. Procédé selon la revendication 8, **caractérisé en ce que** les amplitudes d'impulsions ($I_P$) aux flux lumineux moyens qui représentent $\leq$ 10 % du flux lumineux moyen sont réglées à 10 % de l'intensité nominale ($I_{NENN}$).

Fig. 1

**Lichtstrom**

Fig. 2

Lichtstrom

Fig. 3

**IN DER BESCHREIBUNG AUFGEFÜHRTE DOKUMENTE**

**In der Beschreibung aufgeführte Patentdokumente**

- US 7598683 B1
- WO 2009157763 A2
- US 7463070 B
- EP 0898683 B1
- EP 0898684 B1
- WO 2009077010 A1
- WO 9744614 A1
- WO 9744612 A1